# EUROPEAN PATENT APPLICATION

(11) **EP 1 870 695 A1**
(43) Date of publication of application: **26.12.2007**
(21) Application number: 07110226.3
(22) Date of filing: 13.06.2007
(51) Int. Cl.: G01N 17/00

(54) **Accelerated weathering device with optical slip ring**

(30) Priority: 21.06.2006 US 425450
(71) Applicant: Atlas Material Testing Technology, Llc., Chicago, Illinois 60613 (US)
(72) Inventor: Pilcher, Dan, Chicago, IL 60615 (US); Scott, Kurt P., Chicago, IL 60615 (US); Schultz, Rich, Chicago, IL 60625 (US)
(74) Representative: McCall, John Douglas

(57) **Abstract**

An indoor accelerated weathering device having a rotatable rack in a test chamber for mounting test specimens in an exposure plane includes a light collection device connected to the rack, which is operatively coupled to an optical rotary joint concentric with the rack shaft.

## Description

### Field of the Disclosure

The present disclosure generally relates to improvements to an accelerated weathering device, and more particularly, to an indoor accelerated weathering device equipped with an optical slip ring disposed between a light collection device and a sensor.

### Background of the Disclosure

Accelerated weathering devices are used to simulate adverse weather conditions, such as rain, wind, and sunlight, on specimens in order to anticipate the conduct of certain materials over extended periods of time. For example, designers of a new paint formulation, who cannot wait years for test results, may wish to know if their product can withstand severe weather conditions over a period of years without adverse change in appearance or performance. Accelerated weathering devices may be programmed to simulate the desired condition over shorter periods of time. Some models of indoor accelerated weathering devices use a rotating rack to mount test specimens and submit samples to an artificial environment to simulate accelerated weathering condition such as humidity, temperature, wind, atmospheric pressure, and light exposure. Such models are described in U.S. Patent No. 5,503,032 and 5,646,358 and are hereby fully incorporated herein by reference.

Among the environmental parameters to be varied to recreate desired changing weather conditions is exposure to light. Light often simulates the irradiating energy from the sun in an accelerated daily cycles. A light source can also constitute a secondary heat source in the test area. If an intense light is placed at the center of a generally spherical test volume, all test samples located on the test plane created by the surface of a sphere at a fixed distance from the light will be subject to similar levels of photonic activity. The intensity of the light source must be closely monitored in order to regulate the intensity of the activity on the test plane, control the accelerated weathering conditions, and obtain meaningful test results.

Regulation and monitoring of the light source within the test chamber as disclosed in the prior art and U.S. Patent No. 5,503,032 and 5,646,358, hereby fully incorporated herein by reference, are conducted in either of two unsatisfactory ways. In the first, a battery-powered wireless radiometer detector equipped with a light sensor is mounted on the rotating specimen rack alongside the test specimens. In the second, a front-end optical input sensor is mounted on a fixed axis at some fixed point off the specimen plane. Both configurations present significant disadvantages that eventually translate either into the introduction of complex mathematical correction factors within the results of the tests or rapid degradation of the detection material.

In the first conventional configuration, the wireless radiometer detector is located on the test plane of the test samples but is subject to such other environmental factors as heat, humidity, pressures, and gravitational forces associated with a revolving test specimen plane. The wireless radiometer detector must relay the signals to a fixed radiometer and the entire radiometer. A fragile electro-optic sensor placed in the hostile environment of the weathering device test chamber is submitted to the accelerated weathering conditions of the device. The effective time the detector can continuously measure is limited by the data storage capacity of the device and/or the battery life. The light detected must also be transformed by the detector into an electronic signal using the limited processing capacity of the small device, which then transports the data from the rotating specimen plane to the control mechanism via an electrical slip ring.

The second conventional configuration consists of using a light sensor, possibly attached to a light guide at a fixed point in the chamber outside of the moving specimen plane. In current weathering instruments, the front-end optics consist of a quartz rod that guides the light from the lamp out of the exposure chamber to a photodiode. The photodiode converts the light to an electrical signal that is then sent to the control system electronics. As a result of the measurement being conducted at a different location, the measured intensity of the light will be different than the light received at the specimen plane, so correction factors must be introduced within the results in order to compensate for this variation. These correction factors, based on extrapolation, introduce error factors that are detrimental to the ultimate determination of the sample reaction under fixed accelerated weathering conditions. The sensor, if placed between the samples and the light source, also introduces shading to part of the specimen plane. If the sensor is placed in the back of the sample plane, it is partly shaded by the specimens.

Other test chamber parameters, such as temperature, are relayed from the rotating rack to the fixed measurement chamber through an electrical slip ring. An electrical slip ring is a device equipped with bail bearings, a rotor, and a stator able to transfer electrical signals from a rotating body to a stationary body. In an electrical slip ring, the signals are passed from a rotating conductor to a stationary conductor via conducting brushes. Since an electrical slip ring only relays electrical signals, the light signal from a light sensor must first to be converted into an electrical signal for the information to be relayed to the electronic monitoring and control system.

In the field of accelerated weathering devices, complex mathematical extrapolation formulas are already needed to correlate forced, short-term cycling conditions with actual, long-term weathering conditions. The disadvantage of placing front-end optics of the light monitoring system in any location other than adjacent a sample creates the need for a compensating factor to be added to the model. The application of a compensating factor is also discouraged.

Therefore, a need exists in the art for a weathering system configuration that facilitates irradiance measurement on the rotating sample plane while maintaining sensitive electro-optical components outside the accelerated weathering environment.

### Summary

This disclosure describes an indoor accelerated weathering device having a rotatable rack in a test chamber used for mounting specimens in an exposure plane. The rack is equipped on the sample plane with a light collection device that is operatively couple with a fixed light collection device by a light wave guide functionally connected to an optical rotary joint. In one embodiment an optical slip ring is used as an optical rotary joint.

### Description of the Drawings

Certain embodiments are shown in the drawings. However, it is understood that the present disclosure is not limited to the arrangements and instrumentality shown in the attached drawings, wherein:

FIG. 1 illustrates a 3D perspective view of an indoor accelerated weathering device in accordance with this disclosure.

FIG. 2 illustrates a close-up 3D perspective view of the inside of the upper compartment of the indoor accelerated weathering device in accordance with this disclosure.

FIG. 3. illustrates a 3D frontal view of the inside of the upper compartment of the indoor accelerated weathering device in accordance with this disclosure.

FIG. 4 is a diagrammatic view of the light sensing system in accordance with this invention.

### Detailed Description of the Disclosure

For the purpose of promoting and understanding the principles disclosed herein, reference is made to the preferred embodiments illustrated in the drawings, and specific language is used to describe the same. It is nevertheless understood that no limitation of the scope is thereby intended. Such alterations and further modifications in the illustrated device and such further applications are the principles disclosed as illustrated therein as being contemplated as would normally occur to one skilled in the art to which this disclosure relates.

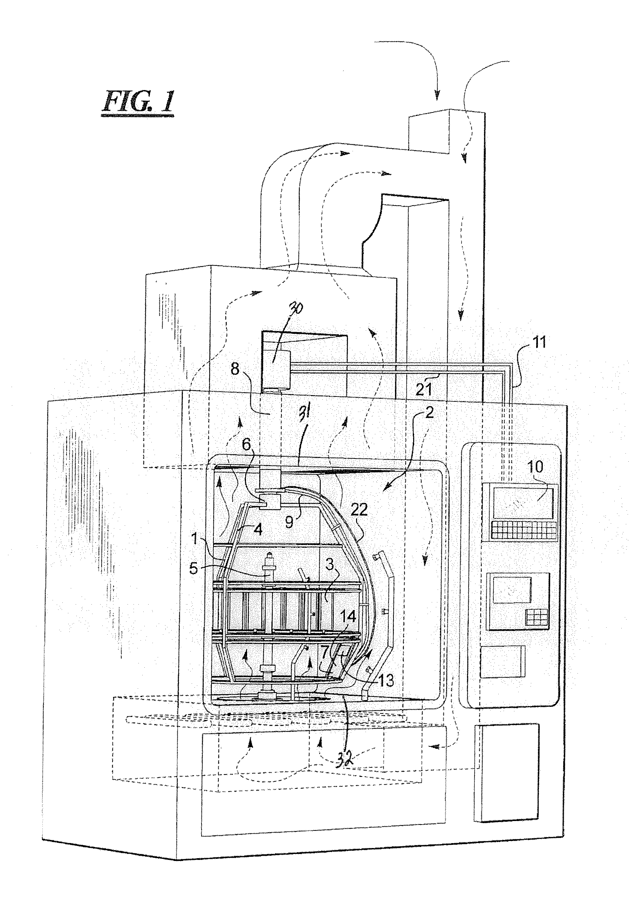

FIG. 1 shows in one aspect of the present disclosure an indoor accelerated weathering device with a rotatable rack 1 located in a test chamber 2 for mounting test specimens 3 in an exposure plane 4 where the rack 1 is rotated around a light source 5. The rack 1 includes a shaft 6 for supporting the rack 1 within the test chamber 2 and to facilitate the rotation of the rack 1 around its axis of rotation. The indoor accelerated device further comprises a light collection device 7 connected to the rack 1 in the exposure plane 4, an optical rotary joint 8 disposed concentric with the shaft, and a light wave guide 9 operatively coupled to the light collection device 7 and the optical rotary joint 8.

In one embodiment, the rack 1 is supported by a top support member or shaft 6 that extends through a top wall of the test chamber 2 of the device. FIG. 1 shows a preferred embodiment where the optical rotary joint 8 is placed axially along the shaft 6 between a driving motor and the shaft 6. It is understood by one of ordinary skill in this art that, based on the type and geometry of the selected optical rotary joint 8, the length of the shaft 6, and the type of motor, it is possible that the three elements be arranged axially or in a direction other than the vertical axis. In another preferred embodiment, the optical rotary joint 8 is of sufficient length and mechanical strength to serve as the shaft 6. The motor driving the rack 1 may also be offset from the axial arrangement of the shaft 6 and the optical rotary joint 8 by the use of gears and the like.

It is also be understood by one of ordinary skill in the art that while the rack 1 as shown on FIG. 1 to be held by an upper vertical shaft 6 and the optical rotary joint 8 is aligned through the top wall of the test chamber 2 at a fixed distance above the bottom wall 32 of the test chamber 2, the disclosure contemplates the rotation of the rack 1 within the test chamber 2 along any other planes necessary to recreate any appropriate accelerated weathering conditions and supported by any other possible rotational support. In FIG. 1, the rack 1 is shown supported from the top, but the rack 1 may also be partly supported on the bottom or any possible nonvertical arrangement of support within a confined space of the test chamber 2.

It is understood by one of ordinary skill in the art that, while test specimens 3 arc shown as rectangular plates on FIGS. 1-3, test specimens 3 may be of any type and geometry as long as they can be mounted on the rack 1. In the case of nonflat test specimens 3, it is understood by one of ordinary skill in the art that the specimen plane created by the use of nonplanar specimens 3 still create an exposure plane 4 centered around the light source 5.

The light collection device 7 connected to the rack 1 in the exposure plane 4 may be comprised of input optics comprising a cosine-type receptor 13 and a light diffuser 14. It is understood by one of ordinary skill in the art that the cosine-type receptor 13 relates to a specifically designed type of diffuser receptor, generally of white molded plastic, designed to correct the reading of the light diffuser based on the cosine law. The cosine law refers to the relationship between the irradiance on a surface and the incident angle. The light intensity falls off in proportion to the cosine of the reflected angle since the effective surface area is reduced as the angle increases. The cosine-type receptor 13 and the light diffuser 14 allow for the automatic correction of the intensity of the light received on the test specimen 3 if the test specimen 3 is located on the rack 1 where the reflected angle of incidence may differ. While one specific type of input optics 7 is disclosed as the preferred embodiment, it is understood by one of skill in the art that any other similar type and technology of detector can be used.

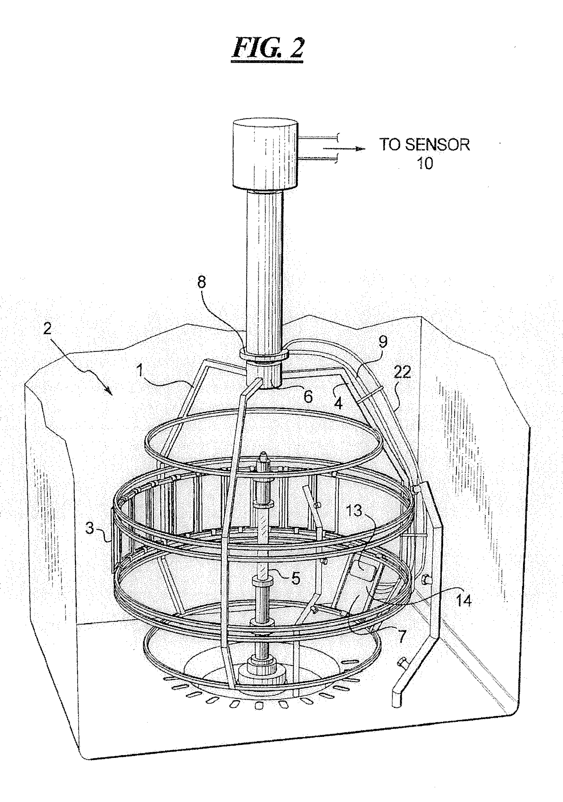

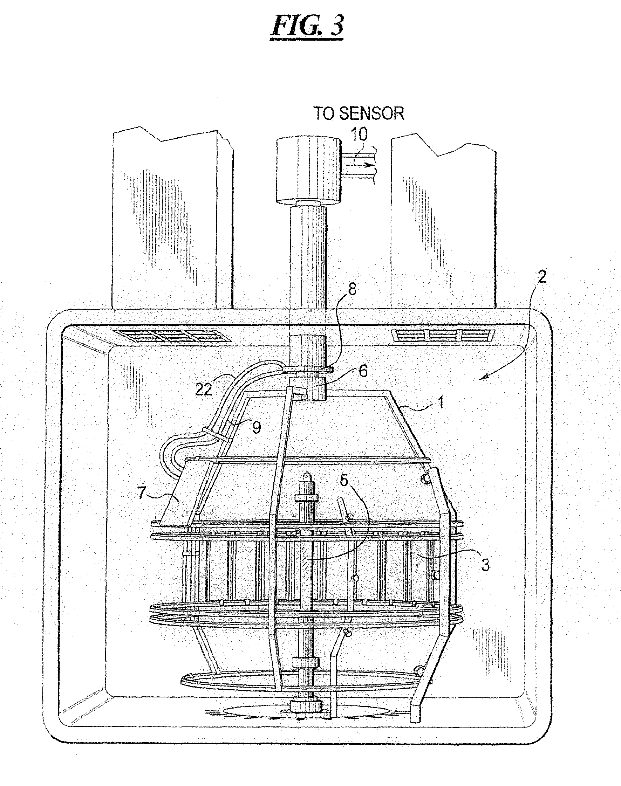

In the preferred embodiments shown in FIGS. 2-3, the light collection device 7 is placed on the rack 1 in place of a test specimen 3. FIG. 2 illustrates an embodiment where the light collection device 7 is placed in the lower half of the rack 1, and FIG. 3 illustrates an embodiment where the light collection device 7 is placed in the upper half of the rack 1. It is understood that while only two locations are shown, the device 7 can be placed at any location along the exposure plane 4, including the central location on the rack 1.

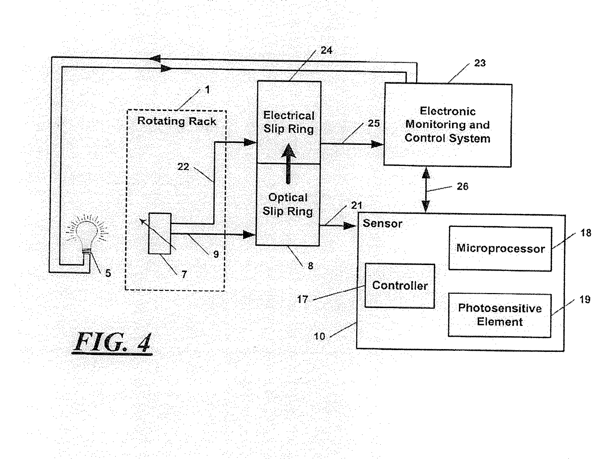

A light wave guide 9 is shown to operatively couple the light collection device 7 to an optical rotary joint 8. FIG. 4 illustrates schematically a situation where a second light wave guide is used to connect the optical rotary joint 8 to a sensor 10 equipped with a photosensitive element 19. In a first preferred embodiment, the light wave guide 9 is a fiber optic cable. Light is constituted by photons when in transit from one location to the next. The fiber optic cable is a transparent tube where photons successively reflect along a cylindrical dielectric waveguide that transmits light along an axis by the process of total internal reflection. Light that enters the fiber optic cable at a first location, such as the light collection device 7 on the rotating rack 1, is transported via the light wave guide 9 to the optical rotary joint 8. In a second preferred embodiment, a light pipe is used to move photons from the light collection device 7 to the optical rotary joint 8. A light pipe is generally understood to be made of a rolled-up, microstructured prismatic film made of highly reflective and transmissive material. After traveling through a first volume of the microstructure, photons reflect at the surfaces between successive prisms. In addition to a fiber optic cable or a light pipe, it is understood by one of ordinary skill in the art that light may be transported by other suitable light conveying means.

In one preferred embodiment, the optical rotary joint is a fiber optic rotary joint (FORJ). While the use of electrical slip rings to trasfer data from a rotating rack 1 to a nonrotating electronic monitoring and control system 23 is disclosed in the prior art, the use of an optical slip ring to transfer light from a rotating rack 1 in the field of accelerated weathering devices is new. A FORJ is a device that allows the transmission of power, electrical signals, and light signals from rotating structure to a stationary structure. The light transfer capacity of the FORJ is fully described in U.S. Patent No. 4,492,427. All other power and control signals pass through standard copper slip rings also included in the FORJ and allow for the transfer of other information and instrumentation from the rack 1 to the stationary device.

It is understood by one of ordinary skill in the art that, while one possible configuration of optical rotary joint 8 is shown in FIGS. 1-3, where the joint is shown to transfer only a single light signal via the light wave guide 9 from the light collection device 7 to the rotary joint 8 and from the rotary joint 8 to the sensor 10, and also only one single data signal 22 is shown to connect the light collection device 7 to the rotary joint 8 and the rotary joint 8 to the sensor 10 via a second data signal 21 to the electronic monitoring and control system 23, a plurality of possible configurations based on geometry, technical requirements, the number of light signals and data signals may be contemplated.

FIG. 4 illustrates a diagrammatic view of the light sensing system in accordance with this invention. A sensor 10 is disposed external to the test chamber 2 and operatively coupled 21 to the optical rotary joint 8 such that an output of the light source 5 may be adjusted. The sensor 10 in a preferred embodiment is equipped with a controller 17, a microprocessor 18, and a photosensitive element 19. In a preferred embodiment, the photo-sensitive element is a spectroradiometer. It is understood by one of ordinary skill in the art of light instrumentation that a spectroradiometer is a particular type of photo-sensitive element in the family of spectrophotometers and is designed to operate and measure a spectral distribution in the visible region of light. While one type of photosensitive element 19 is disclosed as a preferred embodiment, it is understood that any type of photosensitive element for any bandwidth and for any spectral distribution outside of the visible region can be used. For example, if a sample specimen 3 must be tested for infrared conditions, an infrared light source 5 is used and a photosensitive element 19 able to react to this wavelength is used within the sensor 10.

In one preferred embodiment, the sensor is equipped at a minimum with a controller 17 used to regulate and control the intensity of the light source 5 within the test chamber 2. The microprocessor 18 is used to process and analyze the data from the photosensitive element 19. The information from the sensor may be sent to the electronic monitoring and control system 23 to be recorded for further reference within the test result.

In another possible embodiment, the optical rotary joint 8 may also include a sensor for transferring the optical light from the light wave guide 9 into electronic data to be processed directly by the electronic monitoring and control system 23.

Furthermore, while particular preferred embodiments have been shown and described, it is obvious to those skilled in the art that changes and modifications may be made without departing from the spirit and teaching of the disclosure. The matter set forth in the foregoing description and accompanying drawings is offered by way of illustration only and not as limitation. The actual scope of the disclosure is intended to be defined in the following claims when viewed in their proper perspective based on the related art.

## Claims

1. An indoor accelerated weathering device comprising a rack in a test chamber for mounting test specimens so as to define an exposure plane when the rack is rotated around a light source, the rack including a shaft for supporting the rack within the test chamber and facilitating rotation of the rack, the indoor accelerated weathering device further comprising:
a light collection device connected to the rack in the exposure plane;
a optical rotary joint disposed concentric with the shaft; and
a light wave guide operatively coupling to the light collection device and the optical rotary joint.

2. An indoor accelerated weathering device as claimed in claim 1, further comprising a sensor disposed external to the test chamber and operatively coupled to the optical rotary joint such that an output of the light source may be adjusted.

3. An indoor accelerated weathering device as claimed in claim 1 or 2, wherein the light collection device is generally known as an input optics, comprising a cosine-type light receptor and a light diffuser.

4. An indoor accelerated weathering device as claimed in any one of the preceding claims, wherein the light wave guide is a fiber optic cable, a light pipe, or another light-conveying means.

5. An indoor accelerated weathering device as claimed in claim 2, wherein the sensor comprises a controller, a microprocessor, and a photo-sensitive element.

6. An indoor accelerated weathering device as claimed in claim 5, wherein the photo-sensitive element is a spectroradiometer.

7. An indoor accelerated weathering device as claimed in any one of the preceding claims, wherein a second light wave guide operatively couples the sensor and the optical rotary joint.

8. An indoor accelerated weathering device as claimed in claim 5, wherein a conductor operatively couples the photo-sensitive element and the input optics via the optical rotary joint.

9. An indoor accelerated weathering device as claimed in any one of the preceding claims, wherein the light collection device is adjacent tot he test specimens and receives light at the exposure place in the same geometric plane as the test specimens.
